# EUROPEAN PATENT APPLICATION

(11) **EP 2 554 826 A1**
(43) Date of publication of application: **06.02.2013**
(21) Application number: 10784656.0
(22) Date of filing: 31.03.2010
(51) Int. Cl.: F02D 41/22, F02D 45/00, F02M 61/16, F02M 63/00

(54) **ABNORMAL COMBUSTION DETECTION DEVICE FOR INTERNAL COMBUSTION ENGINE AND CONTROL DEVICE FOR INTERNAL COMBUSTION ENGINE**

(71) Applicant: Toyota Jidosha Kabushiki Kaisha, Toyota-shi, Aichi 471-8571 (JP)
(72) Inventor: KORENAGA, Shingo, Toyota-shi Aichi 471-8571 (JP); HAIBARA, Teruaki, Toyota-shi Aichi 471-8571 (JP); MIYASHITA, Shigeki, Toyota-shi Aichi 471-8571 (JP)
(74) Representative: Kuhnen & Wacker
(86) International application number: PCT/JP2010/055901
(87) International publication number: WO 2011/121771

(57) **Abstract**

The present invention has an object to make abnormal combustion of an internal combustion engine detectable by simple means at low cost. For this purpose, an abnormal combustion detecting device provided by the present invention uses a direct injection injector as means for detecting abnormal combustion. In the direct injection injector relating to the abnormal combustion detecting device, a sack chamber is provided at a tip end of a nozzle body, and a nozzle hole is formed to cause the sack chamber and a combustion chamber to communicate with each other. A needle is housed inside the nozzle body, and the sack chamber is opened and closed by the needle, whereby a fuel is directly injected into the combustion chamber. The abnormal combustion detecting device detects lift of the needle from a closing position by, for example, a sensor, and determines that abnormal combustion occurs in the combustion chamber by the fact that lift of the needle is detected at a non-operational time of the direct injection injector.

## Description

### Technical Field

The present invention relates to an abnormal combustion detecting device for detecting abnormal combustion of an internal combustion engine, and a control device which can feed back a detection result of abnormal combustion to control of the internal combustion engine.

### Background Art

As an art of detecting abnormal combustion of an internal combustion engine, the art disclosed in, for example, Japanese Patent Laid-Open No. 2009-30545 is known. The art detects an ion current due to the ions of a combustion chamber, and determines whether or not abnormal combustion occurs from the change in the ion current. However, the prior art requires an element which is complicated and costly, that is, an ion current detecting circuit. Therefore, the art cannot be said as sufficiently satisfactory in the aspect of cost.

### Summary of Invention

The present invention has an object to enable detection of abnormal combustion of an internal combustion engine with simple and inexpensive means. In order to attain such an object, the present invention provides an abnormal combustion detecting device for an internal combustion engine as follows.

An abnormal combustion detecting device provided by the present invention uses a direct injection injector as the means for detecting abnormal combustion. In the direct injection injector relating to the abnormal combustion detecting device, a sack chamber is provided at a tip end of a nozzle body, and a nozzle hole is formed to cause the sack chamber and a combustion chamber to communicate with each other. A needle is housed inside the nozzle body, and the sack chamber is opened and closed by the needle, whereby a fuel is directly injected into the combustion chamber. The abnormal combustion detecting device detects lift of the needle from a closing position, and determines that abnormal combustion occurs in the combustion chamber by a fact that the lift of the needle is detected at a non-operational time of the direct injection injector.

According to the abnormal combustion detecting device which is configured as above, the existing equipment which is the direct injection injector can be used, and therefore, abnormal combustion can be detected at low cost. As the means which detects lift of the needle, a sensor or a switch which generates a signal by a lift action of the needle can be used. A sensor may be used, which changes an output signal in accordance with the lift amount of the needle. If the means is originally equipped in the direct injection injector, cost increase can be avoided by using this. Further, if the means needs to be newly provided, the cost which is required for installation of it is not high as compared with the ion current detecting circuit as in the prior art.

Further, the present invention provides the control device for an internal combustion engine containing the function of the aforementioned abnormal combustion detecting device.

The control target of the control device which is provided by the present invention is an internal combustion engine including a direct injection injector. In the direct injection injector relating to the control device, a sack chamber is provided at a tip end of a nozzle body, and a nozzle hole is formed to cause the sack chamber and a combustion chamber to communicate with each other. A needle is housed inside the nozzle body, and the sack chamber is opened and closed by the needle, whereby a fuel is directly injected into the combustion chamber. The control device measures a lift amount of the needle from a closing position by means such as a sensor, and implements fuel injection amount correction that increases a fuel injection amount in a next cycle by the direct injection injector in accordance with a lift amount of the needle when the needle lifts at a non-operational time of the direct injection injector.

When the pressure in the cylinder rises due to abnormal combustion and the needle lifts, the fuel amount in the sack chamber decreases by back flow of the fuel to the inside of the nozzle body from the sack chamber. When the fuel injection in the next cycle is implemented as usual in! this state, fuel insufficiency occurs by the decrease amount of the fuel amount in the sack chamber, and the air-fuel ratio is likely to be lean. A lean air-fuel ratio promotes occurrence of abnormal combustion in the cycle after the next one. However, according to the control device configured as above, by increasing the fuel injection amount in accordance with the lift amount of the needle, a lean air-fuel ratio, which can occur in the next cycle after occurrence of abnormal combustion, can be prevented. More specifically, abnormal combustion can be prevented from occurring repeatedly.

As the method for fuel injection amount correction by the control device, it is preferable to calculate the amount of the fuel which flows back to the inside of the nozzle body from the sack chamber and determine the correction amount of the fuel injection amount from the back flow fuel amount. The back flow fuel amount can be calculated from the lift amount of the needle. This is because the flow path sectional area of the valve portion is determined by the lift amount of the needle, and the pressure difference between the pressure in the cylinder and the fuel pressure, which is the motive power of the back flow, is correlated with the lift amount of the needle.

Further, in another aspect of the present invention, the control device implements fuel pressure correction which increases pressure of a fuel which is supplied to the direct injection injector in accordance with a lift amount of the needle, when the needle lifts at a non-operational time of the direct injection injector. The aforementioned fuel injection amount correction may be implemented in combination.

According to this aspect, the seal keeping force of the needle is enhanced by the rise in the fuel pressure, and therefore, back flow of the fuel into the inside of the nozzle body from the sack chamber by the lift of the needle can be prevented in the next cycle and the following cycles. As the result that the back flow of the fuel is prevented, the lean air-fuel ratio which occurs due to lift of the needle, and repetition of the abnormal combustion caused by this can be prevented.

In still another aspect of the present invention, the control device calculates an amount of a fuel which flows back to an inside of the nozzle body from the sack chamber, when the needle lifts at a non-operational time of the direct injection injector. The control device implements fuel injection frequency correction which increases a fuel injection frequency in the next cycle by the direct injection injector, when a calculated value of a back flow fuel amount exceeds a capacity of the sack chamber. The fuel injection frequency correction can be implemented in combination with the aforementioned fuel injection amount correction and fuel pressure correction.

The capacity of the sack chamber is the maximum value of the back flow fuel amount, and therefore, when the calculated value of the back flow fuel amount exceeds the capacity of the sack chamber, the already combusted gas in the combustion chamber has flown into the nozzle body. If fuel injection in the next cycle is implemented as usual in this state, the air-fuel ratio is likely to become significantly lean due to extreme insufficiency of the fuel injection amount. The lean air-fuel ratio further promotes occurrence of the abnormal combustion in the subsequent cycle. However, according to the aforementioned aspect, by increasing the fuel injection frequency in the next cycle, a desired amount of fuel can be injected while the gas which flows into the direct injection injector is being exhausted. Thereby, the lean air-fuel ratio which can occur in the next cycle after occurrence of abnormal combustion, and repetition of abnormal combustion caused by this can be prevented.

In still another aspect of the present invention, the control target of the control device is an internal combustion engine including a direct injection injector and a port injector. The control device implements injector switching for stopping the fuel injection by the direct injection injector and switching the fuel injection to fuel injection by the port injector. Further, the control device implements fuel pressure control that changes the pressure of the fuel which is supplied to the direct injection injector alternately between the maximum pressure and the minimum pressure while the fuel injection is switched to the fuel injection by the port injector from the fuel injection by the direct injection injector.

When back flow of the fuel occurs by the lift of the needle, a deposit adhering in the vicinity of the nozzle hole flows in and is likely to be caught between the needle and the seating portion. However, according to the aforementioned mode, the needle is raised and lowered by changing the fuel pressure alternately between the maximum pressure and the minimum pressure, whereby the deposit caught therebetween can be cut and removed. Further, the fuel injection is switched to the fuel injection by the port injector during this while, and therefore, the air-fuel ratio can be prevented from being unstable due to the influence of the fuel pressure control.

### Brief Description of Drawings

[Figure 1] Figure 1 is a view showing a configuration of a direct injection injector of an internal combustion engine to which a control device of an embodiment of the present invention is applied.
[Figure 2] Figure 2 is a flowchart showing a flow of engine control corresponding to abnormal combustion according to the control device of the embodiment of the present invention.
[Figure 3] Figure 3 is a flowchart showing a routine of abnormal combustion determination which is performed in the embodiment of the present invention.
[Figure 4] Figure 4 is a crank angle diagram showing a change of pressure in cylinder at a time of occurrence of abnormal combustion, and a change of a lift amount of a needle which occurs due to it.
[Figure 5] Figure 5 is a diagram showing relationship of the pressure in cylinder and a sensor output.
[Figure 6] Figure 6 is a cycle diagram showing a behavior of the pressure in cylinder at the time of occurrence of abnormal combustion.
[Figure 7] Figure 7 is a flowchart showing a routine of fuel injection amount correction which is performed in an embodiment of the present invention.
[Figure 8] Figure 8 is a diagram showing relationship between the pressure in cylinder and a back flow amount of a fuel per unit time.
[Figure 9] Figure 9 is a crank angle diagram showing one example of a change of the pressure in cylinder at the time of occurrence of abnormal combustion.
[Figure 10] Figure 10 is a diagram showing a change of a blowback amount of a fuel according to a crank angle, which occurs in the example shown in Figure 9.
[Figure 11] Figure 11 is a flowchart showing a routine of fuel pressure correction which is performed in the embodiment of the present invention.
[Figure 12] Figure 12 is a cycle diagram for explaining a content of the fuel pressure correction which is performed in the embodiment of the present invention.
[Figure 13] Figure 13 is a flowchart showing a routine of fuel injection frequency correction which is performed in the embodiment of the present invention.
[Figure 14] Figure 14 is a cycle diagram for explaining a content of injector switch and fuel pressure control which are performed in the embodiment of the present invention.

### Description of Embodiments

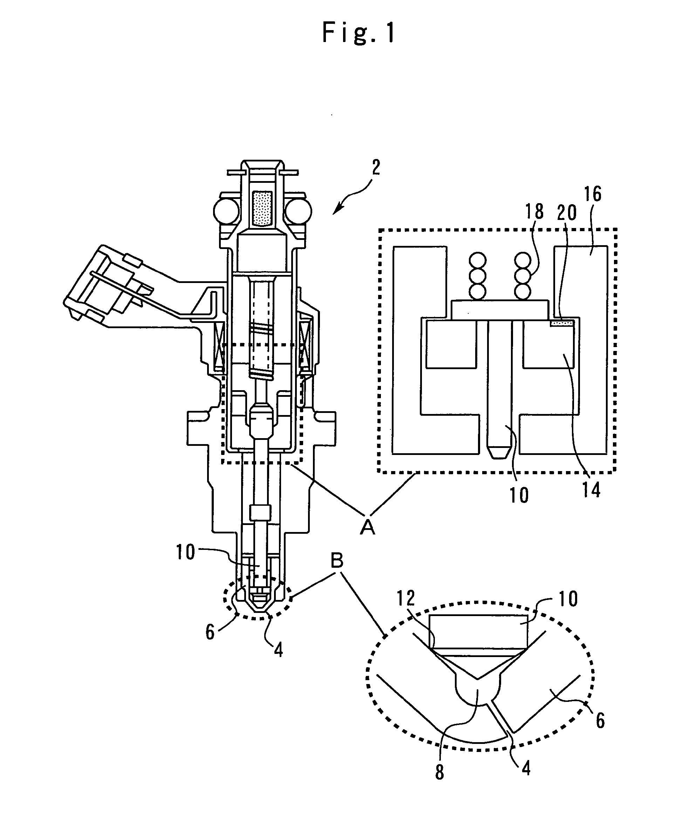

Hereinafter, an embodiment of a control device for an internal combustion engine (hereinafter, an engine) to which the present invention is applied will be described with reference to each of Figures 1 to 14.

The control device of the present embodiment is applied to a dual injection type spark ignition engine including a direct injection injector (high pressure injector) which directly injects a fuel into a combustion chamber, and a port injector (low pressure injector) which injects a fuel into an intake port. The control device of the present invention mainly uses the direct injection injector out of the two injectors, and uses the port injector in a certain limited condition.

Figure 1 is a view showing a configuration of a direct injection injector 2 of an engine to which the control device of the present embodiment is applied. The direct injection injector 2 is configured by including a nozzle body 6 and a needle 10 as shown in Figure 1. A fuel, which is supplied to the direct injection injector 2 through a fuel pipe from a fuel pump not illustrated, is guided inside the nozzle body 6. A nozzle hole 4 for injecting a fuel is formed at a tip end of the nozzle body 6.

As schematically shown by being enlarged in B of Figure 1, a valve seat 12 which the needle 10 can be seated in and separated from is formed in the nozzle body 6. A sack chamber (fuel accumulation chamber) 8 which is a bag-shaped small space is formed between an inner wall of the tip end portion of the nozzle body 6 and a tip end portion of the needle 10. The needle 10 separates from the valve seat 12, whereby the inside of the nozzle body 6 and the sack chamber 8 communicate with each other, and the needle 10 is seated in the valve seat 12, whereby communication of the inside of the nozzle body 6 and the sack chamber 8 is shut off. The nozzle hole 4 is formed to cause the sack chamber 8 to communicate with an outside (combustion chamber).

Further, as schematically shown by being enlarged in A of Figure 1, an end portion of the needle 10 is fixed to a movable core 14. The movable core 14 is urged in the direction to seat the needle 10 in the valve seat 12 by a spring 18. A fixed core 16 opposed to the movable core 14 is disposed in an axial direction of the needle 10. A gap is provided between the movable core 14 and the fixed core 16. The distance of the gap shows a maximum lift amount when the needle 10 separates from the valve seat 12.

In addition to the configuration described above, a sensor 20 which changes an output signal in accordance with the distance between the movable core 14 and the fixed core 16 is attached to the direct injection injector 2 which is used in the present embodiment. The control device of the present embodiment takes in the output signal of the sensor 20, and uses it as the information for determining abnormal combustion of the engine, and as the information for implementing engine control corresponding to the abnormal combustion, as will be described next.

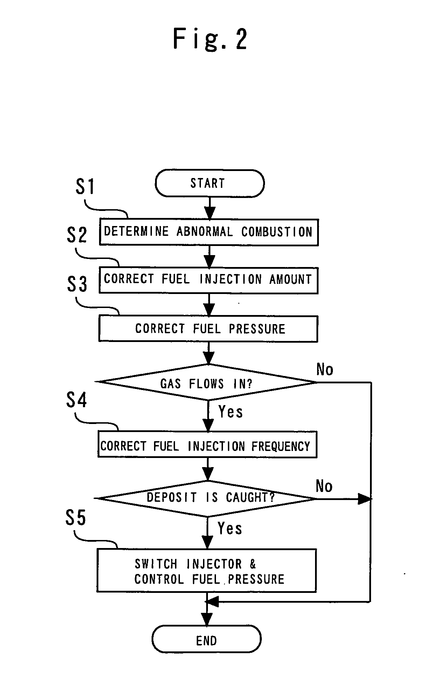

The control device of the present embodiment has the function as an abnormal combustion detecting device which detects abnormal combustion of the engine. When detecting abnormal combustion, the control device of the present embodiment implements engine control corresponding to the abnormal combustion. Figure 2 shows the flow of the engine control in a flowchart. As shown in Figure 2, the control device of the present embodiment performs "abnormal combustion determination" using the direct injection injector 2 in the first step S1. Subsequently, the control device implements "fuel injection amount correction" corresponding to the abnormal combustion in the next step S2. Further, the control device implements "fuel pressure correction" corresponding to the abnormal combustion in the next step S3. When inflow of the gas into the direct injection injector 2 is recognized, the control device further implements "fuel injection frequency correction" in the next step S4. Further, when catching of a deposit is recognized in the direct injection injector 2, the control device further implements "injector switch" and "fuel pressure control" in the next step S5.

Hereinafter, a content of engine control according to the control device of the present embodiment will be described in concrete for each of the aforementioned steps.

### S1: Abnormal combustion determination

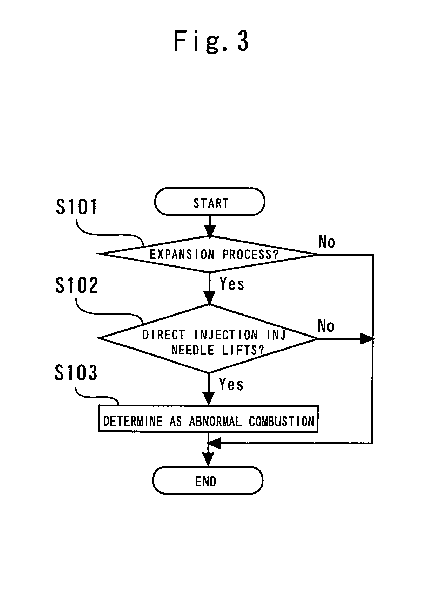

Figure 3 is a flowchart showing a routine of abnormal combustion determination implemented by the control device of the present embodiment. The control device of the present embodiment implements the abnormal combustion determination routine for each cylinder. In the first step S101 of the abnormal combustion determination routine, it is determined whether or not the cylinder is in an expansion stroke (combustion stroke). If the cylinder is not in the expansion stroke, the following steps are skipped.

When the cylinder is in the expansion stroke, the determination of step S102 is performed. In step S102, it is determined whether or not the needle 10 of the direct injection injector 2 is lifted. For the determination, the output signal of the sensor 20 is used. When the needle 10 is lifted from the valve seat 12, the distance between the movable core 14 and the fixed core 16 changes, and therefore, the lift of the needle 10 appears as the change of the output signal of the sensor 20. Accordingly, the lift of the needle 10 can be detected by observing the output signal of the sensor 20, and the lift amount of the needle 10 can be measured from the change amount of the output signal. The control device of the present embodiment has a map (hereinafter, a sensor output-lift amount map) which links the output signal of the sensor 20 to the lift amount of the needle 10. When the lift of the needle 10 is not detected, the following steps are skipped.

When the lift of the needle 10 is detected, the process of step S103 is performed. In step S103, an abnormal combustion flag which indicates that abnormal combustion occurs is set. More specifically, the control device of the present embodiment determines that abnormal combustion has occurred by detection of the lift of the needle 10 in the expansion stroke in which the direct injection injector 2 is not operated.

The grounds for being able to detect abnormal combustion by the lift of the needle 10 is that the pressure in the cylinder abruptly increases at the time of occurrence of abnormal combustion. The needle 10 is pressed against the valve seat 12 by spring force of the spring 18 and fuel pressure, and is simultaneously pressed in the lift direction by the pressure in the cylinder from the side of the sack chamber 8. When the force in the lift direction by the pressure in the cylinder surmounts the force in the seating direction by the spring force and the fuel pressure, lift of the needle 10 from the valve seat 12 occurs. However, selection of the spring force of the spring 18 is performed so that such a thing does not occur in the range of at least ordinary combustion (normal combustion). However, when abnormal combustion occurs, the force in the lift direction which acts on the needle 10 surmounts the force in the seating direction with abrupt increase of the pressure in the cylinder, and lift of the needle 10 is likely to occur.

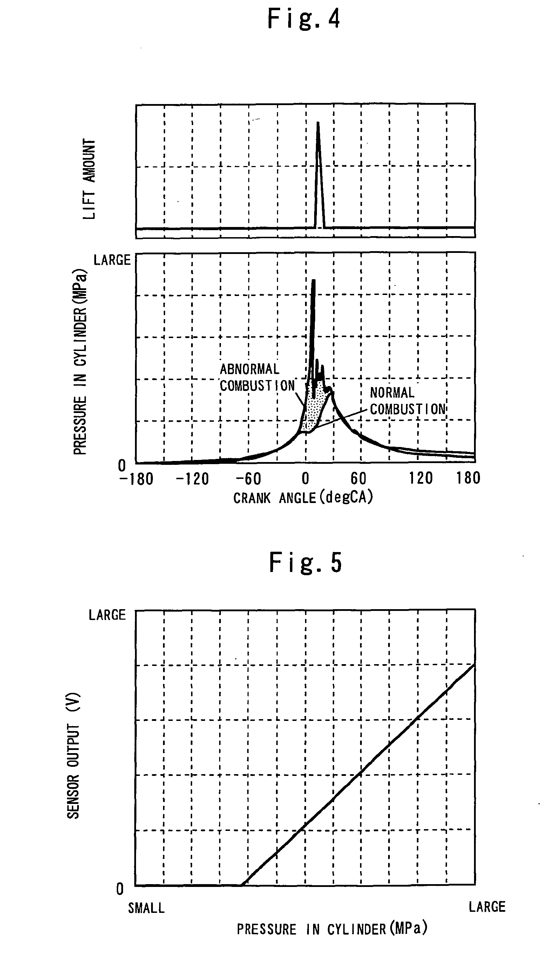

Figure 4 is a crank angle diagram showing a change of the pressure in the cylinder at the time of occurrence of abnormal combustion, and a change of a lift amount of the needle 10 which is caused by this. As shown in the lower section (pressure in the cylinder-crank angle diagram) of Figure 4, a large difference occurs in the peak value of the pressure in the cylinder in abnormal combustion and normal combustion. As a result, at the time of occurrence of abnormal combustion, the force in the lift direction which acts on the needle 10 instantly surmounts the force in the seating direction, and as shown in the upper section (lift amount-crank angle diagram) of Figure 4, the situation in which the needle 10 instantly lift occurs. The lift of the needle 10 at this time is detected by the sensor 20, and thereby, abnormal combustion can be detected at low cost.

Incidentally, from the output signal of the sensor 20, the pressure in the cylinder, in more detail, the maximum value of the pressure in the cylinder by abnormal combustion also can be measured. The lift amount of the needle 10 becomes larger as the pressure in the cylinder becomes higher by abnormal combustion. Figure 5 is a diagram showing relationship of the pressure in the cylinder and the output signal (voltage value) of the sensor 20 when the fuel pressure is made constant. From Figure 5, it can be confirmed that a change appears in the sensor output at the point of time when the pressure in the cylinder exceeds a certain value, and thereafter, the sensor output also becomes large proportionally to the rise in the pressure in the cylinder. The pressure in the cylinder (20 MPa in Figure 5) when a change appears in the sensor output is pressure in the cylinder when the needle 10 is lifted.

By acquiring the data as shown in Figure 5 in advance by an experiment, the maximum value of the pressure in the cylinder by abnormal combustion can be estimated from the output signal of the sensor 20. The control device of the present embodiment has a map (hereinafter, a sensor output-pressure in the cylinder map) which links the output signal of the sensor 20 to the pressure in the cylinder with the fuel pressure as a key.

The sensor output-pressure in the cylinder map can be used for verification of the determination result of step S102. When a noise is superimposed on the output signal of the sensor 20, the noise is likely to be erroneously determined as the lift of the needle 10. If the output signal of the sensor 20 is converted into the pressure in the cylinder in accordance with the sensor output-pressure in the cylinder map, the force in the lift direction which acts on the needle 10 by the pressure in the cylinder and the force in the seating direction which acts on the needle 10 by the fuel pressure at this time and the spring force of the spring 18 can be compared in numeral values. As a result of the comparison, if the force in the lift direction is smaller, the output signal of the sensor 20 which detects the lift is a noise, and the determination result of step S102 is found to be an error. By adding such processing for verification to the abnormal combustion determination routine, detection precision of abnormal combustion can be more enhanced.

### S2: Fuel injection amount correction

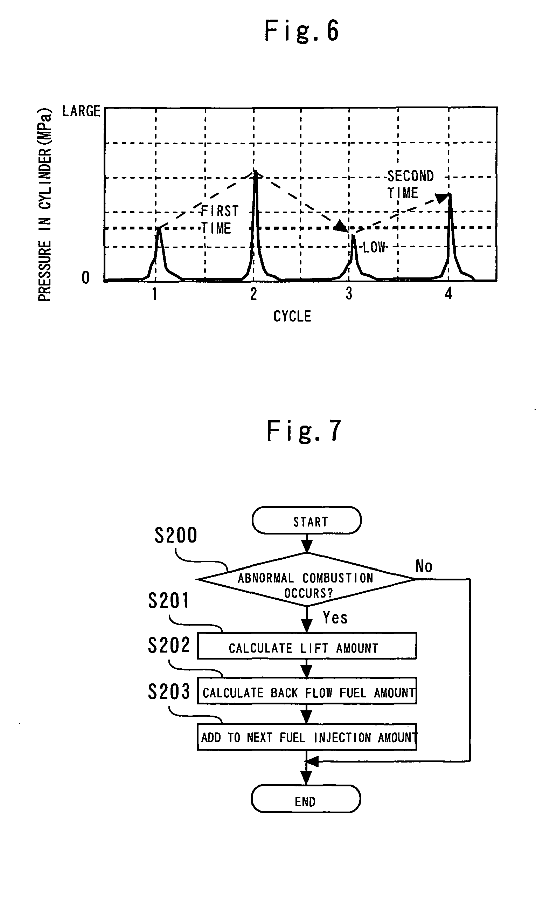

Figure 6 is a cycle diagram showing a behavior of the pressure in the cylinder at the time of occurrence of abnormal combustion. As shown in Figure 6, when abnormal combustion occurs in a certain cycle (the second cycle in Figure 6), abnormal combustion occurs again in the cycle after the next one (the fourth cycle in Figure 6). The reason why abnormal combustion repeatedly occurs like this is considered as follows.

When abnormal combustion occurs, the needle 10 of the direct injection injector 2 is lifted due to abrupt increase of the pressure in the cylinder. At this time, a back flow of the fuel to the inside of the nozzle body 6 from the sack chamber 8 occurs through the gap between the lifted needle 10 and the valve seat 12. As a result, the fuel amount in the sack chamber 8 decreases. However, the fuel injection amount is calculated on the precondition that the sack chamber 8 is filled with the fuel. Therefore, when the fuel injection of the next cycle is implemented as usual, the fuel injection amount becomes insufficient by the decrease of the fuel amount in the sack chamber 8. Insufficiency of the fuel injection amount not only makes the air-fuel ratio lean, but also promotes occurrence of additional abnormal combustion in the cycle after the next one. This is considered to be because HC in the residual gas increases by the worsening of combustion with the lean air-fuel ratio.

Fuel injection amount correction is a process for avoiding the situation as described above. More specifically, it is an object of the implementation of the process to prevent the air-fuel ratio from becoming lean in the next cycle to the cycle in which abnormal combustion occurs by correction of the fuel injection amount to thereby avoid the situation in which abnormal combustion repeatedly occurs.

Figure 7 is a flowchart showing a routine of fuel injection amount correction which is implemented by the control device of the present embodiment. The control device of the present embodiment implements the fuel injection amount correction routine for each cylinder. The first step S200 of the fuel injection amount correction routine is confirmation of whether or not the abnormal combustion occurrence flag is set. If the abnormal combustion occurrence flag is set, the processes of steps S201, S202 and S203 for fuel injection amount correction are implemented.

In step S201, the lift amount of the needle 10 is calculated from the output signal of the sensor 20 by using the sensor output-lift amount map.

In the next step S202, the fuel amount which flows back to the inside of the nozzle body 6 from the sack chamber 8 is calculated. The result of integrating the back flow amount of the fuel per unit time is the back flow fuel amount which is calculated here. The flow back amount per unit time is determined by the flow path sectional area of the valve portion formed by the gap between the needle 10 and the valve seat 12, and the pressure difference of the pressure in the cylinder and the fuel pressure. The flow path sectional area of the valve portion is determined by the lift amount of the needle 10 from the valve seat 12. Further, there is the correlation between the pressure difference of the pressure in the cylinder and the fuel pressure, and the lift amount of the needle 10. Accordingly, the back flow amount per unit time can be expressed as the function of the lift amount of the needle 10. In step S202, the back flow fuel amount is calculated from the lift amount of the needle 10 by using the function.

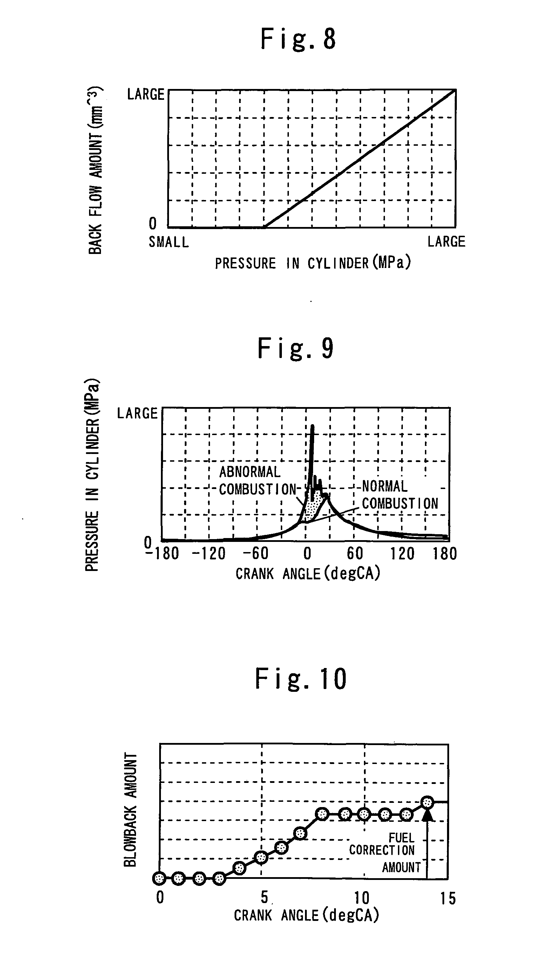

Figure 8 is a diagram showing the relationship between the pressure in the cylinder and the back flow amount of the fuel per unit time when the fuel pressure is set as constant. From Figure 8, it can be confirmed that back flow of the fuel starts from the point of time when the pressure in the cylinder exceeds a certain value, and thereafter, the back flow amount also becomes large proportionally to rise of the pressure in the cylinder. Here, Figure 9 is a crank angle diagram showing one example of change of the pressure in the cylinder at the time of occurrence of abnormal combustion. When the pressure in the cylinder changes as shown in Figure 9, back flow of the fuel occurs in the section in which the pressure in the cylinder exceeds the upper limit value (the limit value of being capable of keeping seal of the needle 10). The back flow amount per unit time is calculated from the lift amount of the needle 10, and the lift amount is integrated for the above described section, whereby, the back flow fuel amount, that is, the total amount of the fuel which flows back can be calculated. Figure 10 is a diagram showing the change of the back flow fuel amount (blowback amount) which occurs in the example shown in Figure 9 in accordance with the crank angle.

In the next step S203, the correction amount of the fuel injection amount is determined from the back flow fuel amount. In the example shown in Figure 10, the final back flow fuel amount (blowback amount) is directly determined as the correction amount of the fuel injection amount. The determined correction amount is added to the fuel injection amount of the next cycle. Thereby, the fuel injection amount does not become insufficient in the next cycle, and a lean air-fuel ratio as well as repetition of abnormal combustion with the lean air-fuel ratio is avoided.

### S3: Fuel pressure correction

As described with use of Figure 6, abnormal combustion of the engine tends to occur repeatedly. The process for preventing a lean air-fuel ratio which becomes the cause of the repeated occurrence to avoid recurrence of abnormal combustion is the aforementioned fuel injection amount correction. Meanwhile, the fuel pressure correction which will be described next is a process for preventing further repetition of abnormal combustion when abnormal combustion occurs again.

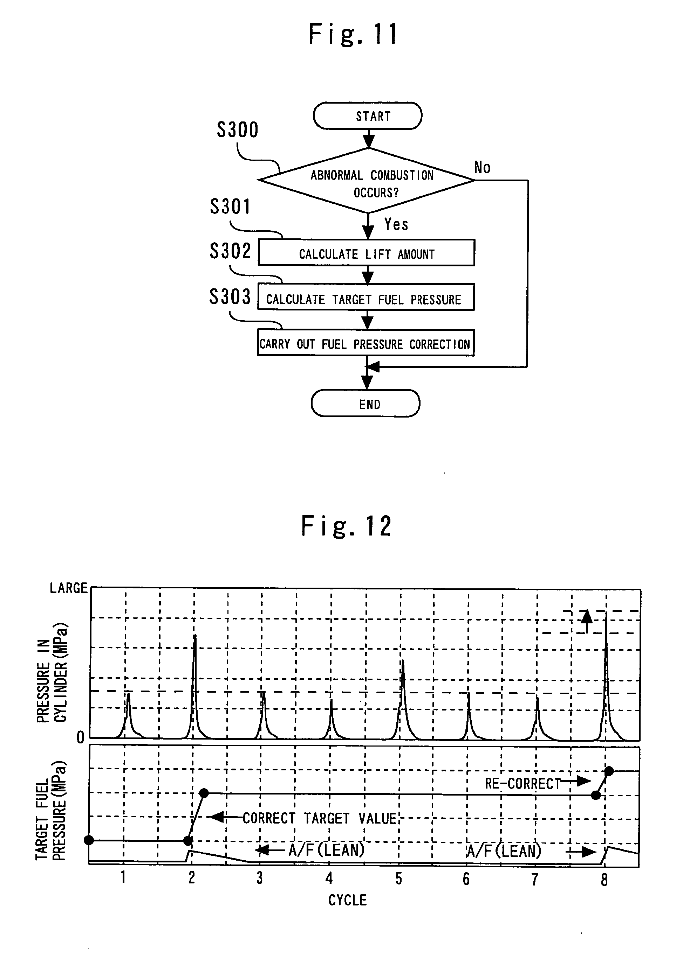

Figure 11 is a flowchart showing a routine of fuel pressure correction which is implemented by the control device of the present embodiment. The control device of the present embodiment implements the fuel pressure correction routine for each cylinder. The first step S300 of the fuel injection amount correction routine is confirmation of whether or not the abnormal combustion occurrence flag is set. If the abnormal combustion occurrence flag is set, the processes of steps S301, S302 and S303 for fuel pressure correction are implemented.

In step S301, the lift amount of the needle 10 is calculated from the output signal of the sensor 20 by using the sensor output-lift amount map.

The lift of the needle 10 occurs because the force in the lift direction which acts on the needle 10 surmounts the force in the seating direction as a result that the pressure in the cylinder is abruptly increased due to abnormal combustion. The force in the lift direction which acts on the needle 10 at the time of occurrence of abnormal combustion can be determined from the lift amount calculated in step S301. This is because the lift amount of the needle 10 and the pressure in the cylinder are correlated with each other. If the force in the lift direction at the time of occurrence of abnormal combustion can be determined, the force in the seating direction can be adjusted to surmount the force in the lift direction. The force in the seating direction which acts on the needle 10 is the resultant force of the force by the fuel pressure and the spring force of the spring 18, and therefore, by correcting the fuel pressure, the needle 10 can be prevented from being lifted when abnormal combustion recurs.

In the next step S302, the target fuel pressure for causing the needle 10 not to be lifted when abnormal combustion recurs based on the lift amount calculated in step S301. Subsequently, in the next step S303, the fuel pressure is corrected so that the actual fuel pressure becomes the target fuel pressure. Correction of the fuel pressure can be performed by adjusting the rotational speed of the fuel pump which supplies the fuel to the direct injection injector 2.

Figure 12 shows the implementation result of the fuel pressure correction by the above routine. Figure 12 expresses the respective behaviors of the pressure in the cylinder, the target fuel pressure and the air-fuel ratio in the cycle diagrams. From Figure 12, it can be read that abnormal combustion occurs in the second cycle, and abnormal combustion occurs again in the fifth cycle and the eighth cycle thereafter. In the first abnormal combustion, shift of the air-fuel ratio to the lean side occurs. However, as a result that the target fuel pressure is corrected to the increase side at that point of time, shift of the air-fuel ratio to the lean side does not occur at the time of occurrence of the next abnormal combustion. This is because by rise in the fuel pressure, the seal keeping force of the needle 10 is enhanced, and lift of the needle 10 with rise of the pressure in the cylinder is prevented. Thereafter, shift of the air-fuel ratio to the lean side occurs again, but at that point of time, the target fuel pressure is further re-corrected to the increase side. Thereby, the lift of the needle 10 with the rise of the pressure in the cylinder is prevented more reliably.

### S4: Fuel injection frequency correction

As described above, the amount of the fuel which flows back to the inside of the nozzle body 6 from the sack chamber 8 at the time of occurrence of abnormal combustion can be calculated from the lift amount of the needle 10. However, the amount of the fuel which can flow back is limited, and the capacity of the sack chamber 8 is the maximum value of the back flow fuel amount. Therefore, when the back flow fuel amount calculated from the lift amount exceeds the capacity of the sack chamber 8, not only back flow of all the fuel in the sack chamber 8 but also entry of the combusted gas in the combustion chamber into the inside of the nozzle body 6 is anticipated. When the fuel injection of the next cycle is implemented as usual in the state in which gas enters the inside of the nozzle body 6, extreme insufficiency of the fuel injection amount is caused. The lean air-fuel ratio due to insufficiency of the fuel injection amount promotes occurrence of abnormal combustion in the following cycles.

Fuel injection frequency correction is a process for avoiding the situation as described above. In the fuel injection frequency correction, the fuel injection frequency in one cycle is increased. The fuel injection corresponding to the increased frequency is preliminary fuel injection for exhausting the gas which enters the inside of the nozzle body 6. By implementing the preliminary fuel injection prior to the regular fuel injection, a predetermined amount of fuel can be injected while the gas entering the inside of the nozzle body 6 is being exhausted.

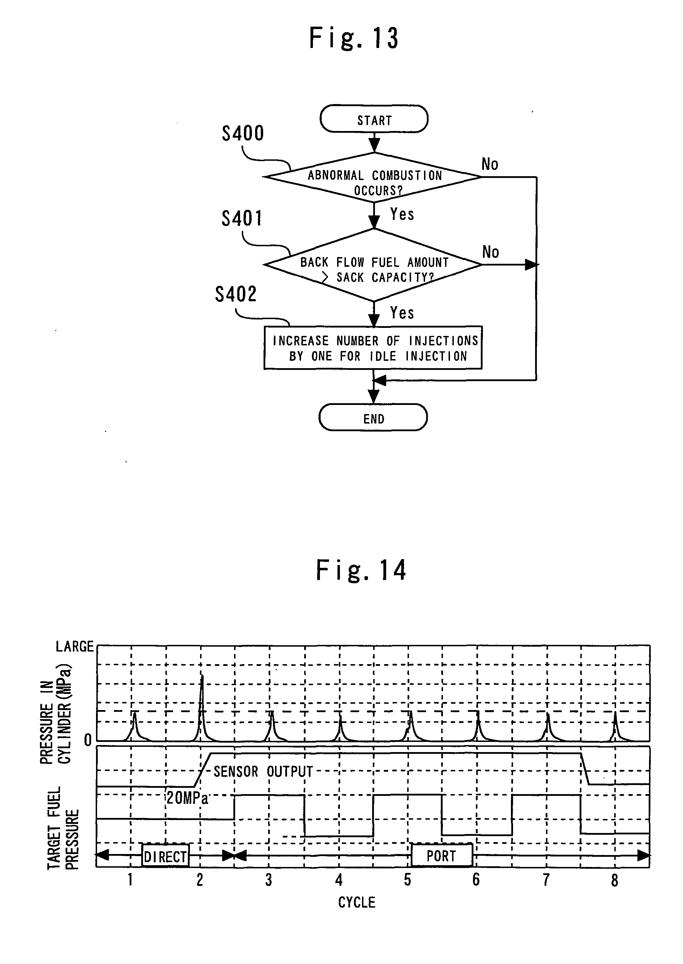

Figure 13 is a flowchart showing a routine of the fuel injection frequency correction implemented by the control device of the present embodiment. The control device of the present embodiment implements the fuel injection frequency correction routine for each cylinder. The first step S400 of the fuel injection frequency correction routine is confirmation of whether or not the abnormal combustion occurrence flag is set. If the abnormal combustion occurrence flag is set, the processes of steps S401 and S402 for fuel injection amount correction are implemented.

In step S401, it is determined whether or not the back flow fuel amount calculated from the lift amount of the needle 10 exceeds the capacity of the sack chamber 8. If the calculated value of the back flow fuel amount is the capacity of the sack chamber 8 or less, correction of the fuel injection frequency is not performed. However, if the calculated value of the back flow fuel amount exceeds the capacity of the sack chamber 8, the fuel injection frequency is increase by one time in step 402. Subsequently, preliminary fuel injection for exhausting the gas which enters the inside of the nozzle body 6, that is, idle injection of the direct injection injector 2 is performed. Thereby, insufficiency of the fuel injection amount does not occur in the next cycle, and a lean air-fuel ratio and repetition of abnormal combustion with the lean air-fuel ratio are avoided.

### S5: Injector switching and fuel pressure control

When back flow of the fuel occurs due to lift of the needle 10 at the time of occurrence of abnormal combustion, a deposit which adheres in the vicinity of the nozzle hole 4 is likely to flow into the nozzle body 6 with the fuel. Subsequently, the deposit which flows into the nozzle body 6 is likely to be further caught between the needle 10 and the valve seat 12. If such an event occurs, the needle 10 cannot be seated, and leakage of the fuel from the gap is caused.

Injector switching and fuel pressure control are processes for coping with the situation as described above. The content of each process can be described with use of Figure 14. Figure 14 expresses setting of the sensor output and the target fuel pressure and setting of the injector in use in cycle diagrams together with the behavior of the pressure in the cylinder.

From Figure 14, it can be read that abnormal combustion occurs in the second cycle, and with this, the sensor output is increased. Further, it can be also read that though the pressure in the cylinder decreases, the sensor output remains high. The sensor output not decreasing means that the needle 10 stays lifted. The aforementioned catching of the deposit can be considered to be the cause of it. In this case, the control device of the present embodiment stops the fuel injection by the direct injection injector 2, and switches the fuel injection to that by a port injector. More specifically, the control device implements injector switching. Simultaneously with this, the control device of the present embodiment changes the target fuel pressure of a high pressure system to which the direct injection injector 2 is connected alternately between the maximum pressure and the minimum pressure for each cycle.

The target fuel pressure is changed to the maximum pressure for the purpose of cutting the deposit by pressing the needle 10 against the valve seat 12 with a strong force. Meanwhile, the target fuel pressure is changed to the minimum pressure for the purpose of removing the deposit from between the needle 10 and the valve seat 12 by lifting the needle 10 to a large extent. By rising and lowering the needle 10 for each cycle like this, the deposit caught therebetween can be cut and removed. Further, during this while, the fuel injection can be switched to that by the port injector, and therefore, the air-fuel ratio is prevented from being unstable due to variation in the fuel pressure.

In the example shown in Figure 14, the sensor output is reduced after the seventh cycle. This means that the needle 10 is normally seated, that is, the deposit caught between the needle 10 and the valve seat 12 is removed. In this case, the control device of the present embodiment stops changing the target fuel pressure between the maximum pressure and the minimum pressure. Further, the control device stops fuel injection by the port injector, and switches the fuel injection to that by the direct injection injector 2 again.

### Others

The embodiment of the present invention is described above, but the present invention is not limited to the aforementioned embodiment. The present invention can be carried out by being variously modified from the aforementioned embodiment without departing from the range of the gist of the present invention. For example, the present invention may be carried out by modifying the aforementioned embodiment as follows.

All the processes of S2, S3, S4 and S5 out of respective processes carried out in the aforementioned embodiment do not necessarily have to be carried out. One or a plurality of them may be selectively carried out in combination with the abnormal combustion determination (S1). For example, selection of carrying out only the combination of the abnormal combustion determination (S1) and the fuel injection amount correction (S2), only the combination of the abnormal combustion determination (S1) and the fuel pressure correction (S3), only the combination of the abnormal combustion determination (S1) and the fuel injection frequency correction (S4), and only the combination of the abnormal combustion determination (S1), and the injector switching and the fuel pressure control (S5) can be made. As a matter of course, more processes can be combined and carried out.

Further, in the aforementioned embodiment, the control target of the control device is the engine including the direct injection injector and the port injector. However, if the injector switch and the fuel pressure control of S5 are not implemented, the control target can be the engine having only the direct injection injector.

### Description of Reference Numerals

- 2: Direct injection injector
- 4: Nozzle hole
- 6: Nozzle body
- 8: Sack chamber
- 10: Needle
- 12: Valve seat
- 14: Movable core
- 16: Fixed core
- 18: Spring
- 20: Sensor

## Claims

1. An abnormal combustion detecting device for an internal combustion engine, comprising:
a direct injection injector which has a sack chamber provided at a tip end of a nozzle body, a nozzle hole which causes the sack chamber and a combustion chamber to communicate with each other, and a needle which is housed inside the nozzle body to open and close the sack chamber, and directly injects a fuel into the combustion chamber;
lift detecting means which detects lift of the needle from a closing position; and
abnormal combustion determining means which determines that abnormal combustion has occurred in the combustion chamber by a fact that the lift of the needle is detected at a non-operational time of the direct injection injector.

2. A control device for an internal combustion engine comprising a direct injection injector which has a sack chamber provided at a tip end of a nozzle body, a nozzle hole which causes the sack chamber and a combustion chamber to communicate with each other, and a needle which is housed inside the nozzle body to open and close the sack chamber, and directly injects a fuel into the combustion chamber, comprising:
lift amount measuring means which measures a lift amount of the needle from a closing position; and
fuel injection amount correcting means which increases a fuel injection amount in a next cycle by the direct injection injector in accordance with a lift amount of the needle when the needle lifts at a non-operational time of the direct injection injector.

3. The control device for an internal combustion engine according to claim 2, wherein the fuel injection amount correcting means includes
back flow fuel amount calculating means which calculates an amount of a fuel which flows back to the inside of the nozzle body from the sack chamber based on the lift amount of the needle, and
correction amount determining means which determines a correction amount of a fuel injection amount based on a back flow fuel amount.

4. The control device for an internal combustion engine according to claim 2 or 3, further comprising:
fuel pressure correcting means which increases pressure of a fuel which is supplied to the direct injection injector in accordance with a lift amount of the needle when the needle lifts at a non-operational time of the direct injection injector.

5. The control device for an internal combustion engine according to claim 2, further comprising:
back flow fuel amount calculating means which calculates an amount of a fuel which flows back to the inside of the nozzle body from the sack chamber based on a lift amount of the needle when the needle lifts at a non-operational time of the direct injection injector; and
fuel injection frequency correcting means which increases a fuel injection frequency in the next cycle by the direct injection injector when a calculated value of a back flow fuel amount exceeds a capacity of the sack chamber.

6. The control device for an internal combustion engine according to claim 2,
wherein the internal combustion engine further comprises a port injector which injects a fuel to an intake port,
the control device further comprising:
injector switching means which stops fuel injection by the direct injection injector and switches the fuel injection to fuel injection by the port injector when the needle lifts and a state in which the needle lifts continues at a non-operational time of the direct injection injector; and
fuel pressure control means which alternately changes pressure of a fuel which is supplied to the direct injection injector between maximum pressure and minimum pressure while the fuel injection is switched to the fuel injection by the port injector from the fuel injection by the direct injection injector.
